# FASCICULE DE BREVET EUROPEEN

(11) **EP 1 087 242 B1**
(45) Date de publication et mention de la délivrance du brevet: **30.07.2003**
(21) Numéro de dépôt: 99402345.5
(22) Date de dépôt: 24.09.1999
(51) Int. Cl.: G02B 5/20, H01Q 15/00

(54) **Structures multicouches transparentes en infrarouge et absorbantes en hyperfréquences**
Infrarotdurchlässige mikrowellenabsorbierende Mehrschichtstrukturen
Infrared transmitting, microwave absorbing multilayer structures

(43) Date de publication de la demande: 28.03.2001
(73) Titulaire: Thales, 75008 Paris (FR)
(72) Inventeur: Normand, Frank, Thomson-CSF PIDB, 94117 Arcueil Cedex (FR); Guerin, Frédéric, Thomson-CSF PIDB, 94117 Arcueil Cedex (FR); Berginc, Gérard, Thomson-CSF PIDB, 94117 Arcueil Cedex (FR)
(74) Mandataire: Chaverneff, Vladimir

(56) Documents cités:
- EP-A- 0 677 888
- US-A- 4 871 220
- US-A- 5 119 232
- US-A- 5 481 400
- US-A- 5 488 371
- US-A- 5 776 612

## Description

La présente invention concerne des structures multicouches transparentes en infrarouge, et à propriétés spécifiques en hyperfréquences.

Le développement des systèmes optroniques s'accompagne de l'apparition de nouvelles contraintes auxquelles certains composants de ces systèmes doivent répondre. Parmi ces contraintes se trouvent la discrétion radar, la protection contre les interférences électromagnétiques parasites bas niveau issues d'une partie de l'équipement ou d'un autre ensemble, et la protection contre les armes hyperfréquences et impulsions électromagnétiques de fort niveau. Certaines contraintes relèvent plus particulièrement des applications militaires (discrétion et protection contre une arme hyperfréquences), d'autres concernent à la fois les domaines civils et militaires (protection contre les interférences parasites). Dans ce derniers cas, les normes récemment entrées en vigueur (MIL-STD-461 et FCC Rules-Part 15 aux Etats-Unis) imposent aux équipements des seuils de performances minimales à atteindre.

Parmi les systèmes optroniques concernés se trouvent les enceintes ou cavités contenant des composants optroniques, implantées sur divers systèmes d'armes, telles que les nacelles ou O.S.F., les FLIR, et les systèmes intégrés ou non de reconnaissance ou de guidage de missiles. Ces ensembles comportent en particulier une ouverture ou fenêtre (hublot plan, courbe, à facettes ou dôme) faisant office de séparation entre le senseur optronique et l'extérieur. Généralement, les seules exigences concernant cette fenêtre sont la transparence optique, la résistance mécanique et la tenue sous divers environnements extérieurs (sabloérosion, pluvioérosion, agents chimiques). Les nouvelles contraintes de discrétion, de protection contre les interférences électromagnétiques et de protection contre les armes hyperfréquences imposent une nouvelle conception de la fenêtre, qui conduit à spécifier non seulement des propriétés mécaniques et optiques, mais également hyperfréquences.

Les fonctions de protection et de discrétion ne peuvent être atteintes, pour certaines morphologies et géométries de fenêtres, qu'en spécifiant non seulement une transmission hyperfréquences aussi faible que possible pour la réduction du contributeur « cavité » et pour la protection électromagnétique (champ fort, foudre, arme hyperfréquences...), mais également une réflexion minimale dans l'intervalle de fréquences considéré, pour la réduction de signature radar. Il s'agit dans ce cas de concevoir un hublot qui soit d'une part, optiquement transparent, et d'autre part, absorbant et à fort effet d'écran en hyperfréquences. Or, les seuls exemples de hublots à propriétés duales optiques et hyperfréquences dans la littérature ouverte sont des fenêtres transparentes en visible ou infrarouge et à très faible transmission en hyperfréquences, pour lesquelles aucune spécification d'absorption hyperfréquences n'est demandée.

La présente invention concerne des structures adaptées à la réalisation de fenêtres optiquement transparentes et possédant des propriétés hyperfréquences adéquates pour la discrétion et la protection des senseurs optroniques.

La présente invention se rapporte à un nouveau type de fenêtre optiquement transparent, absorbant et à fort effet d'écran en hyperfréquences, basé sur le concept des structures absorbantes radar en couches épaisses. Il existe dans le domaine des micro-ondes des structures absorbantes radar particulièrement simples, les écrans de Dällenbach ou absorbants monocouches. Ceux-ci peuvent être diélectriques ou magnétiques. Pour des raisons de transparence optique, nous ne considérons ici que des matériaux diélectriques, et nous nous restreignons donc à la première catégorie d'écran. Un écran de Dällenbach électrique comprend une couche de matériau dont l'épaisseur est fonction de sa permittivité, εᵣ, et de la fréquence f à laquelle on désire que l'absorption soit maximale (typiquement quelques mm pour des diélectriques usuels entre 2 et 18 Ghz). On connaît d'après le document US 5 119 232A un écran comportant une couche absorbant les hyperfréquences, suivie d'une couche à faible réflectivité en hyperfréquences. Afin d'augmenter la largeur de bande d'absorption, il est usuel de recourir à des écrans multicouches comprenant au moins deux couches épaisses (épaisseur typiquement supérieure au mm). Certaines de ces couches comportent de faibles pertes en hyperfréquences et une permittivité réelle généralement faible: elles remplissent en particulier une fonction d'adaptation d'impédance. D'autres couches possèdent des pertes en hyperfréquences et sont le siège de la dissipation de l'énergie du champ hyperfréquences.

La présente invention concerne une extension de ce type de structure pour la réalisation de fenêtres optroniques transparentes en infrarouge, et possédant au moins une des propriétés électromagnétiques suivantes : surface équivalente radar réduite, compatibilité électromagnétique, et protection vis-à-vis d'une impulsion ou d'une arme hyperfréquence. Trois axes d'amélioration des propriétés sont pris en considération par rapport à un écran multicouches classique : la transparence optique, la résistance vis-à-vis de l'environnement extérieur, et l'amélioration des performances hyperfréquences.

L'invention se rapporte plus particulièrement au cas le plus simple où seulement trois couches épaisses sont considérées: une couche d'adaptation d'impédance, une couche à pertes en hyperfréquences, et une structure de court-circuit. Le problème se posant d'emblée est celui de l'assemblage des différentes couches permettant de maintenir une transmission optique satisfaisante.

Lors de la traversée d'une interface parfaite entre deux matériaux d'indices optiques n₁ et n₂, les pertes de signal par réflexion sont égales à R = {(n₁ - n₂)/(n₁ + n₂)}² : elles sont d'autant plus élevées que n₁ et n₂ sont différents. Par exemple, pour le germanium Ge et le fluorure de magnésium M_{g}F₂, on a R = 24.8 % entre 3 et 5 µm, alors que pour Ge et le sulfure de zinc ZnS, on a R = 91.5 % entre 8 et 12 µm. Ceci impose de traiter l'interface en déposant une séquence adaptée de couches minces antireflets, d'où une complexité accrue de la réalisation de la structure. De plus, l'assemblage mécanique (par exemple, via un système sous vide) ou le collage (colle organique ou verre minéral) des deux matériaux, nécessaire pour la cohésion mécanique du hublot, contribue à dégrader la transmission optique même lorsque n₁ et n₂ sont proches. En effet, la présence d'une couche de matériau d'épaisseur difficilement contrôlable et d'indice différent d'au moins un des deux matériaux en contact est susceptible d'induire des pertes optiques supplémentaires, des interférences et des longueurs de chemin optiques différentes ; il s'ensuit une dégradation importante des performances optiques de la fenêtre.

La présente invention a pour objet une structure multicouches à couches épaisses transparentes en infrarouge, à bonne absorption en hyperfréquences, qui ait de bonnes propriétés de résistance mécanique vis-à-vis de l'environnement extérieur, et qui soit facile à réaliser.

Afin de simplifier au maximum la réalisation, tout en réduisant le coût de la fenêtre et en améliorant ses performances optiques, l'invention propose d'espacer les différentes couches épaisses par des lames d'air d'épaisseur ajustable de façon à optimiser les propriétés hyperfréquences. La fenêtre de l'invention a la structure suivante :
a) une couche externe de matériau diélectrique optiquement transparent au moins en infrarouge, en général à faibles pertes en hyperfréquences, de quelques mm d'épaisseur. Cette couche est la première rencontrée par l'onde hyperfréquences. Il est possible d'utiliser un matériau résistant aux agressions de l'environnement extérieur (sabloérosion, pluvioérosion, agents chimiques),voire de traiter sa face externe par un revêtement spécifique afin d'augmenter la longévité du hublot,
b) une première lame d'air d'épaisseur comprise entre quelques centièmes de mm et quelques mm,
c) une couche de matériau diélectrique optiquement transparent, à pertes en hyperfréquences, de quelques mm d'épaisseur,
d) une seconde lame d'air d'épaisseur comprise entre quelques dixièmes de mm et quelques mm,
e) un court-circuit hyperfréquences, typiquement une grille inductive métallique (réalisée par gravure d'un film mince métallique continu) déposée sur un substrat optiquement transparent au moins en infrarouge, ou une plaque massive de semi-conducteur optiquement transparent au moins en infrarouge (exemple : Ge) de résistivité et d'épaisseur adéquates. La seconde solution sera en général limitée au domaine infrarouge, du fait des contraintes d'absorption liées au gap du semi-conducteur.

Afin de présenter une transparence optique satisfaisante, toutes les couches ci-dessus en contact avec l'air (ou une partie de celles-ci) comportent un traitement antireflets dans la bande spectrale infrarouge ou visible considérée. La fenêtre est une structure multicouche dont les éléments peuvent aisément être maintenus en contact, avec des propriétés mécaniques satisfaisantes, par un système de serrage ordinaire. L'élaboration ne pose donc aucun problème spécifique.

Dans les structures dont la description suit, les matériaux retenus sont optiquement transparents et comportent des antireflets classiques, d'où la transparence optique résultante de la fenêtre. La présence du court-circuit garantit une transmission hyperfréquences minimale, et l'agencement des différentes couches se trouvant devant celui-ci permet d'optimiser les propriétés d'absorption hyperfréquences sur l'intervalle de fréquences visé.

La présente invention sera mieux comprise à la lecture de la description détaillée de plusieurs modes de réalisation, pris à titre d'exemples non limitatifs et illustrés par le dessin annexé, sur lequel :
- la figure 1 est un diagramme d'évolution des coefficients de réflexion spéculaire de deux structures conformes à l'invention,
- les figures 2 et 3 sont des diagrammes d'évolution des coefficients de transmission, réflexion et absorption optiques des structures de la figure 1,
- la figure 4 est un diagramme similaire à celui de la figure 1, pour deux autres structures conformes à l'invention, et
- les figures 5 et 6 sont des diagrammes similaires à ceux des figures 2 et 3, pour les structures de la figure 4.

Nous considérons d'abord des fenêtres dont la structure générique a été indiquée ci-dessus. Le tableau 1 regroupe deux exemples de fenêtres, dans lesquels la couche externe est constituée d'un matériau diélectrique à très faibles pertes en hyperfréquences, du sulfure de zinc (qualité multispectrale), et où le court-circuit est une plaque de germanium de qualité optique de conductivité suffisamment élevée pour assurer une réflexion supérieure ou égale à -15 dB. Les divers traitements antireflets, six au total, sont indiqués dans le tableau 1. Ils sont tous aisément réalisables : les deux premiers aux interfaces air/ZnS et les quatre autres aux interfaces air/Ge. Dans la pratique, il est possible, si nécessaire, de choisir un traitement en face externe du ZnS qui soit à la fois durable et antiréfléchissant.

**Tableau 1 :**

| Caractéristiques de deux fenêtres pour la bande 8-12 µm. Description en partant de la couche externe de la fenêtre. AR = traitement antireflets 8-12 µm. | | |
|---|---|---|
| Structure | Fenêtre IR3-A | Fenêtre IR3-B |
| Couche épaisse externe | ZnS multispectral avec AR 2 faces, 6,7 mm | ZnS multispectral avec AR 2 faces, 7 mm |
| Lame d'air | 0,3 mm | 0,3 mm |
| Couche épaisse à pertes | Ge avec AR 2 faces, conductivité = 4 S/m, épaisseur = 4,6 mm | Ge avec AR 2 faces, conductivité = 4 S/m, épaisseur = 5,1 mm |
| Lame d'air | 1,7 mm | 1,1 mm |
| Court-circuit | Ge avec AR 2 faces, conductivité = 30 S/m épaisseur = 6 mm | Ge avec AR 2 faces, conductivité = 30 S/m épaisseur = 6 mm |
| **Notations :** ZnS : sulfure de zinc Ge : germanium AR : antireflets | | |

### Performances hyperfréquences

Les performances hyperfréquences d'une structure sont fonction des critères d'optimisation. Ainsi on peut imposer des contraintes optiques ou mécaniques induisant des épaisseurs ou des qualités de matériaux bien spécifiques. Dans le tableau 1 sont présentées deux structures optimisées pour des critères hyperfréquences différents, les critères optiques et mécaniques étant supposés identiques. Ainsi la structure notée IR-3-A est optimisée pour induire une réduction de signature radar optimale pour les bandes radars S et X, les performances dans les autres bandes n'étant pas considérées. Par contre, la structure notée IR-3-B est, quant à elle, optimisée pour induire une réduction de signature optimale pour l'ensemble de la bande 2-18 Ghz, sans discrimination de bandes.

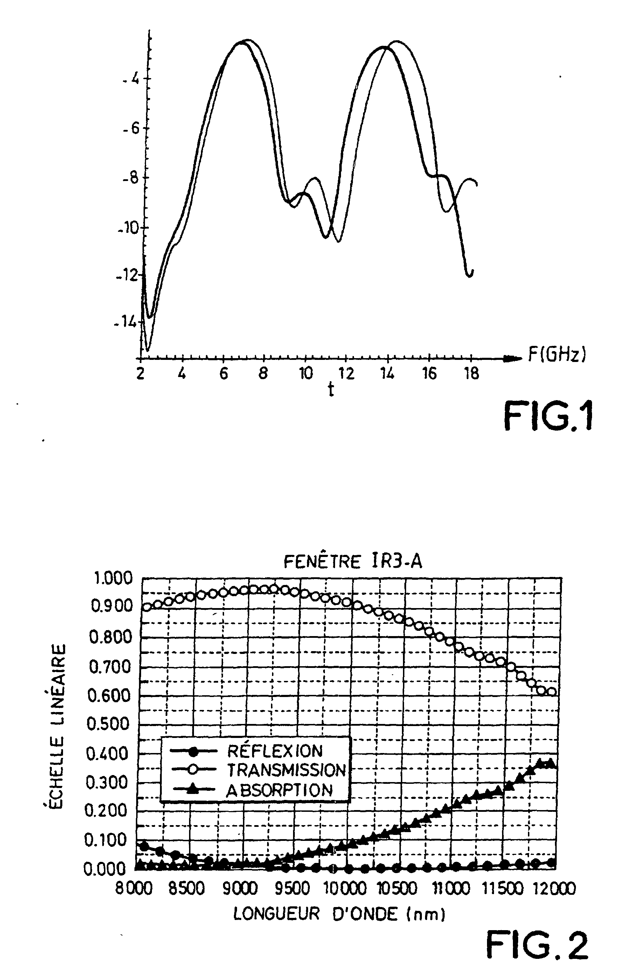

On a reporté sur la figure 1 les coefficients de réflexion spéculaire pour les structures IR-3A et IR-3B. On a reporté dans le tableau 2, les valeurs moyennes du coefficient de réflexion spéculaire pour les deux structures pour la bande radar totale, à savoir 2-18 Ghz, et pour les deux bandes S et X.

**Tableau 2.**

| Structure | Performances sur S + X | Performances sur 2-18 Ghz |
|---|---|---|
| IR-3-A | -8,4 dB | -5,8 dB |
| IR-3-B | -8,1 dB | -6 dB |

L'analyse des résultats résumés dans le tableau 2 montre que les performances des deux structures sont très voisines bien que les critères d'optimisation hyperfréquences soient différents.

### Performances optiques

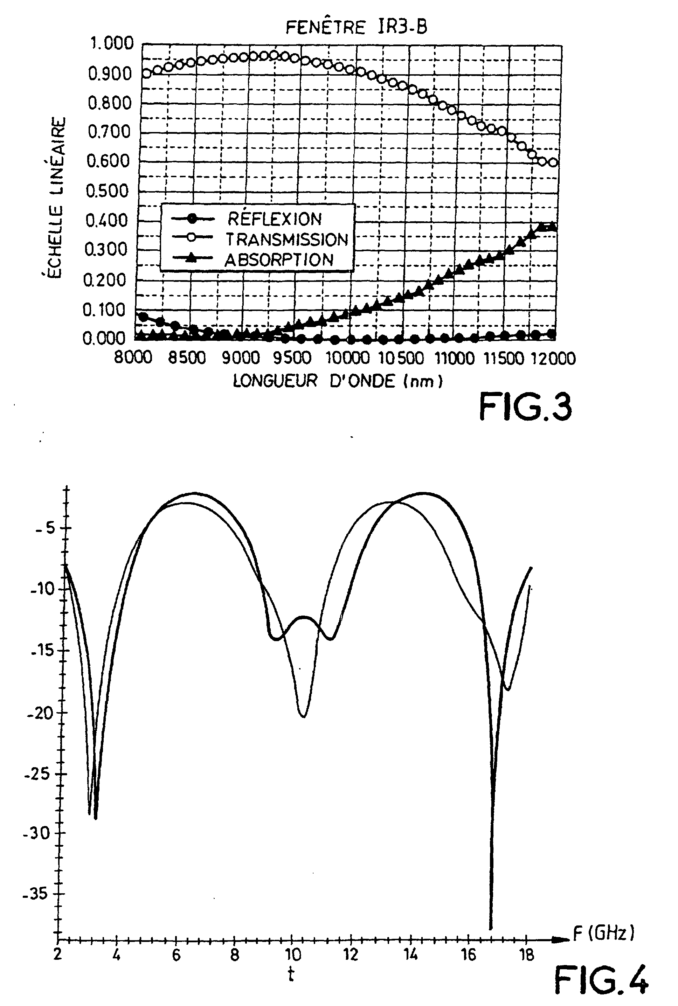

Les performances optiques des structures IR-3-A et IR-3-B sont obtenues à l'aide d'un logiciel où les calculs de transmission, réflexion et absorption de la fenêtre globale sont effectués. Les épaisseurs des couches épaisses (ZnS et Ge) étant fixées par les performances hyperfréquences, les degrés de liberté restants sont les indices et les épaisseurs des couches antireflets mentionnées ci-dessus. Une optimisation permettant de maximiser la transmission de l'ensemble en jouant sur ces paramètres conduit aux courbes présentées sur les figures 2 et 3. Pour les deux exemples indiqués, les transmissions moyennes entre 8 et 12 microns sont données dans le tableau 3. Elles sont tout à fait acceptables, compte tenu des performances hyperfréquences décrites ci-dessus. Notons qu'entre 8 et 10 microns, les transmissions moyennes des fenêtres sont supérieures à 90 %. L'absorption croissante au-delà de 10 microns est due essentiellement au réseau cristallin du sulfure de zinc.

**Tableau 3 :**

| Transmission optique moyenne de deux fenêtres entre 8 et 12 µm. | |
|---|---|
| Fenêtre IR3-A | Fenêtre IR3-B |
| 85,8 % | 85,3 % |

### Fenêtres transparentes bispectrales en bandes infrarouges II et III (3-5 et 8-12 µm)

Les architectures de fenêtres détaillées ci-dessus peuvent toutes être modifiées de manière à fonctionner dans les deux bandes infrarouges 3-5 et 8-12 µm. En effet, puisque les matériaux employés (ZnS et Ge) présentent une haute transparence à la fois entre 3 et 5 et entre 8 et 12 microns, il suffit de recourir à des traitements antireflets bispectraux pour obtenir des fenêtres utilisables en bandes infrarouges II et III. De tels antireflets sont, pour la plupart, déjà disponibles, d'où une phase de conception simplifiée et un coût réduit.

### Fenêtres transparentes en bande infrarouge II (3-5 µm)

### Structures

Le tableau 3 regroupe deux exemples de fenêtres, où la couche externe est constituée d'un matériau diélectrique à très faibles pertes, le fluorure de magnésium (polycristallin et fritté), et où le court-circuit est une plaque de germanium de qualité optique. Les divers traitements antireflets sont indiqués dans le tableau 4. On en dénombre quatre, tous aisément réalisables, car ils ne concernent que des interfaces air/Ge à l'intérieur de la structure. Un traitement sur la face externe du MgF₂ n'est en pratique pas nécessaire en raison du faible indice du matériau (1,35) et de ses qualités mécaniques, mais peut être ajouté le cas échéant.

**Tableau 4 :**

| Caractéristiques de deux fenêtres pour la bande 3-5 µm. Description en partant de la couche externe du hublot. AR = traitement antireflets 3-5 µm. | | |
|---|---|---|
| Structure | Fenêtre IR2-A | Fenêtre IR2-B |
| Couche épaisse externe | MgF₂ fritté polycristallin, 9,1 mm | MgF₂ fritté polycristallin, 9,4 mm |
| Lame d'air | 0,3 mm | 0,3 mm |
| Couche épaisse à pertes | Ge avec AR 2 faces, conductivité = 4S/m, épaisseur = 4 mm | Ge avec AR 2 faces, conductivité = 4 S/m, épaisseur = 4,9 mm |
| Lame d'air | 3,7 mm | 1,4 mm |
| Court-circuit | Ge avec AR 2 faces, conductivité = 30 S/m épaisseur = 6 mm | Ge avec AR 2 faces, conductivité = 30 S/m épaisseur = 6 mm |
| **Notations :** ZnS : sulfure de zinc Ge: germanium AR : antireflets | | |

### Performances hyperfréquences

De la même manière que dans le cas des fenêtres optiquement transparentes en bande infrarouge Il ou en bandes infrarouges II et III, les structures spécifiquement transparentes en bande II peuvent être optimisées pour des critères hyperfréquences spécifiques. Ainsi, la structure notée IR2-A est optimisée pour induire une réduction de signature radar optimale pour les bandes radars S et X, les performances dans les autres bandes n'étant pas considérées, et la structure notée IR-2-B est, quant à elle, optimisée pour induire une réduction de signature optimale pour l'ensemble de la bande 2-18 Ghz, sans discrimination de bandes.

On a reporté sur la figure 4 les coefficients de réflexion spéculaire pour les structures IR2-A et IR-2-B. On a reporté dans le tableau 4, les valeurs moyennes du coefficient de réflexion spéculaire pour les deux structures pour la bandé radar totale, à savoir 2-18 Ghz, et pour les deux bandes S et X.

**Tableau 4.**

| Structure | Performances sur S + X | Performances sur 2-18 Ghz |
|---|---|---|
| IR-2-A | -10,4 dB | -6,1 dB |
| IR-2-B | -9,3 dB | -6,7 dB |

L'analyse des résultats résumés dans le tableau 4 montre que le critère hyperfréquences d'optimisation a plus d'influence pour ce genre de structure : gain de 0,6 dB pour une optimisation dans toute la bande radar, et gain de près de 1 dB pour l'optimisation en bandes S + X. Cette légère différence de comportement par rapport aux structures transparentes en bande infrarouge III, est liée à la nature de l'lRdôme (fenêtre extérieure). Dans un cas, on a du ZnS de permittivité diélectrique d'environ 8,4, et dans l'autre, on a du MgF₂ de permittivité diélectrique plus faible (5,1). Cette faible permittivité permet des performances hyperfréquences supérieures et donc induit un accroissement de la latitude pour l'optimisation en fonction des critères d'optimisation, en l'occurrence pour les critères hyperfréquences.

### Performances optiques

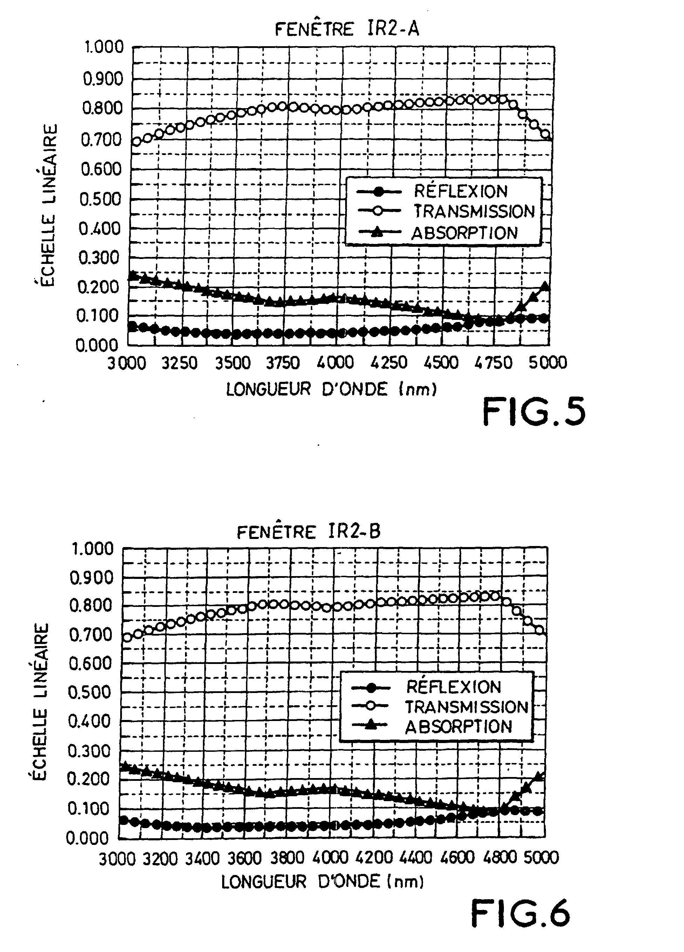

Les performances optiques des structures IR-2-A et IR-2-B sont calculées de la même manière que ci-dessus (structures IR3- A et B); elles sont illustrées sur les figures 5 et 6. Pour les deux exemples indiqués, les transmissions moyennes entre 3 et 5 microns sont données dans le tableau 4. Comme ci-dessus, elles sont tout à fait satisfaisantes étant données les performances hyperfréquences décrites en référence au tableau 4. L'absorption par le fluorure de magnésium fritté (essentiellement liée à sa microstructure) est la cause principale de l'absorption optique de la structure totale. Toutefois, sa faible permittivité en hyperfréquence en fait un des meilleurs compromis pour les fenêtres considérés ici.

**Tableau 5 :**

| Transmission optique moyenne de deux fenêtres entre 3 et 5 µm. | |
|---|---|
| Fenêtre IR2-A | Fenêtre IR2-B |
| 79 % | 78,6 % |

Pour les bandes infrarouges, le matériau à pertes que nous avons considéré est exclusivement du germanium, qui est un matériau standard, même si les caractéristiques électriques recherchées pour cette application particulière en font un matériau optique non classique. En fait, tout semi-conducteur peut convenir dès que nous pouvons connaître et contrôler sa résistivité électrique. Ainsi, nous pouvons utiliser le germanium, le silicium, l'arséniure de gallium, le phosphorure de bore, le phosphorure de gallium, le carbure de carbone, etc...

Pour les espaceurs, tout matériau optique traditionnel peut convenir. Bien entendu, nous avons le sulfure de zinc, le séléniure de zinc, mais également le verre 9754 de chez Corining, le fluorure de magnésium, As₂S₃, les germanates...

## Revendications

1. Structure multicouches à couches épaisses transparentes en infrarouge, à faibles transmission et réflexion en hyperfréquences, **caractérisée en ce qu'**elle comporte, depuis la face d'entrée des éventuelles ondes hyperfréquences, dans l'ordre: une couche externe de matériau diélectrique optiquement transparent au moins aux infrarouges, une première lame d'air, une couche de matériau diélectrique optiquement transparent à pertes en hyperfréquences, une seconde lame d'air et un court-circuit hyperfréquences.

2. Structure selon la revendication 1, **caractérisée en ce que** la couche à pertes est en matériau semiconducteur.

3. Structure selon la revendication 1 ou 2, **caractérisé en ce que** la couche de matériau diélectrique a une épaisseur de quelques mm, que la première lame d'air a une épaisseur comprise entre quelques centièmes de mm et quelques mm, que la couche de matériau diélectrique à pertes hyperfréquences a une épaisseur de quelques mm, et que la seconde lame d'air a une épaisseur comprise entre quelques dixièmes de mm et quelques mm.

4. Structure selon l'une des revendications précédentes, **caractérisée en ce que** le court-circuit hyperfréquences est une grille inductive métallique déposée sur un substrat optiquement transparent au moins en infrarouge.

5. Structure selon l'une des revendications 1 à 3, **caractérisée en ce que** le court-circuit hyperfréquences est une plaque massive de semi-conducteur optiquement transparent au moins en infrarouge.

6. Structure selon l'une des revendications précédentes, **caractérisée en ce qu'**au moins une partie de toutes les couches en contact avec l'air comportent un traitement antireflets dans la bande spectrale de fonctionnement de la structure.

7. Structure selon l'une des revendications précédentes, **caractérisé en ce que** la première couche de matériau diélectrique est réalisée en un matériau résistant aux agressions de l'environnement extérieur.

8. Structure selon l'une des revendications 1 à 6, **caractérisée en ce que** la face externe de la première couche de matériau diélectrique a un revêtement résistant aux agressions de l'environnement extérieur.

9. Structure selon l'une des revendications précédentes, **caractérisée en ce que** la première couche diélectrique est en ZnS multispectral, que la deuxième couche diélectrique et le court-circuit hyperfréquences sont en Ge.

10. Structure selon l'une des revendications 1 à 8, **caractérisée en ce que** la première couche diélectrique est en MgF₂ fritté polycristallin, et les deux autres couches en Ge.

## Patentansprüche

1. Mehrschichtenstruktur aus im Infrarotband transparenten und im Mikrowellenbereich eine geringe Durchlässigkeit aufweisenden dicken Schichten, **dadurch gekennzeichnet, daß** sie beginnend von der Auftreffseite der eventuellen Mikrowellen nacheinander enthält: eine äußerste Schicht aus einem zumindest im Infrarotband optisch transparenten dielektrischem Material, eine erste dünne Luftschicht, dann eine Schicht aus einem optisch transparenten dielektrischen Material mit Verlusten im Mikrowellenbereich, dann eine zweite dünne Luftschicht und schließlich einen Mikrowellenkurzschluß.

2. Struktur nach Anspruch 1, **dadurch gekennzeichnet, daß** die Schicht mit Verlusten im Mikrowellenbereich aus einem Halbleitermaterial besteht.

3. Struktur nach Anspruch 1 oder 2, **dadurch gekennzeichnet, daß** die äußerste Schicht aus dielektrischem Material eine Dicke von einigen Millimetern, die erste Luftschicht eine Dicke zwischen einigen Hundertstel Millimeter und einigen Millimetern, die Schicht aus dielektrischem Material mit Verlusten im Mikrowellenbereich eine Dicke von einigen Millimetern und die zweite Luftschicht eine Dicke zwischen einigen Zehntel Millimeter und einigen Millimetern besitzt.

4. Struktur nach einem der vorstehenden Ansprüche, **dadurch gekennzeichnet, daß** der Mikrowellenkurzschluß von einem induktiven Metallgitter gebildet wird, das auf ein zumindest im Infrarotband optisch transparentes Substrat aufgebracht ist.

5. Struktur nach einem der Ansprüche 1 bis 3, **dadurch gekennzeichnet, daß** der Mikrowellenkurzschluß eine massive Halbleiterplatte ist, die zumindest im Infrarotband optisch transparent ist.

6. Struktur nach einem der vorstehenden Ansprüche, **dadurch gekennzeichnet, daß** mindestens ein Teil der Schichten, die mit der Luft in Kontakt stehen, eine im Betriebsspektralband der Struktur wirksame Antireflexbehandlung enthalten.

7. Struktur nach einem der vorstehenden Ansprüche, **dadurch gekennzeichnet, daß** die erste Schicht dielektrischen Materials von einem Material gebildet wird, das gegen äußere Einflüsse widerstandsfähig ist.

8. Struktur nach einem der Ansprüche 1 bis 6, **dadurch gekennzeichnet, daß** die Außenseite der ersten Schicht dielektrischen Materials eine Beschichtung trägt, die gegen äußere Einflüsse widerstandsfähig ist.

9. Struktur nach einem der vorstehenden Ansprüche, **dadurch gekennzeichnet, daß** die erste dielektrische Schicht aus multispektralem ZnS ist und daß die zweite dielektrische Schicht und der Mikrowellenkurzschluß aus Germanium sind.

10. Struktur nach einem der Ansprüche 1 bis 8, **dadurch gekennzeichnet, daß** die erste dielektrische Schicht aus polykristallinem, gesintertem MgF₂ ist und daß die beiden anderen Schichten aus Germanium sind.

## Claims

1. Multilayer structure having thick infrared-transparent layers, exhibiting low microwave transmission and reflection, **characterized in that** it comprises, in order, from the entry face for any microwaves: an external layer of dielectric material that is optically transparent at least to infrared, a first air layer, a layer of microwave-lossy optically transparent dielectric material, a second air layer and a microwave short circuit.

2. Structure according to Claim 1, **characterized in that** the lossy layer is made of a semiconductor material.

3. Structure according to Claim 1 or 2, **characterized in that** the layer of dielectric material has a thickness of a few mm, **in that** the first air layer has a thickness of between a few hundredths of an mm to a few mm, **in that** the layer of microwave-lossy dielectric material has a thickness of a few mm and **in that** the second air layer has a thickness of between a few tenths of an mm and a few mm.

4. Structure according to one of the preceding claims, **characterized in that** the microwave short circuit is a metal inductive grid deposited on a substrate that is optically transparent at least in the infrared.

5. Structure according to one of Claims 1 to 3, **characterized in that** the microwave short circuit is a bulk sheet of semiconductor optically transparent at least in the infrared.

6. Structure according to one of the preceding claims, **characterized in that** at least part of all of the layers in contact with air include an anti-reflection treatment so as to be non-reflecting in the operating spectral band of the structure.

7. Structure according to one of the preceding claims, **characterized in that** the first layer of the dielectric material is made of a material resistant to attack by the external environment.

8. Structure according to one of Claims 1 to 6, **characterized in that** the external face of the first layer of dielectric material has a coating resistant to attack by the external environment.

9. Structure according to one of the preceding claims, **characterized in that** the first dielectric layer is made of multispectral ZnS and **in that** the second dielectric layer and the microwave short circuit are made of Ge.

10. Structure according to one of Claims 1 to 8, **characterized in that** the first dielectric layer is made of polycrystalline sintered MgF₂ and the other two layers are made of Ge.
